# EUROPÄISCHE PATENTSCHRIFT

(11) **EP 1 390 116 B1**
(45) Veröffentlichungstag und Bekanntmachung des Hinweises auf die Patenterteilung: **09.03.2005**
(21) Anmeldenummer: 02722284.3
(22) Anmeldetag: 28.03.2002
(51) Int. Cl.: B01D 21/00

(54) **VERFAHREN UND VORRICHTUNG ZUR STOFFTRENNUNG**
METHOD AND DEVICE FOR SEPARATING MATERIALS
PROCEDE ET DISPOSITIF DE SEPARATION DE MATERIAUX

(30) Priorität: 12.04.2001 DE 10118443
(43) Veröffentlichungstag der Anmeldung: 25.02.2004
(73) Patentinhaber: BOKELA Ingenieurgesellschaft für mechanische Verfahrenstechnik mbH, 76131 Karlsruhe (DE)
(72) Erfinder: STAHL, Werner, H., 76829 Landau (DE); HOFFNER, Bernhard, 76227 Karlsruhe (DE)
(74) Vertreter: Wunderlich, Rainer, Dipl.-Ing.
(86) Internationale Anmeldenummer: PCT/EP2002/003551
(87) Internationale Veröffentlichungsnummer: WO 2002/083259

(56) Entgegenhaltungen:
- WO-A-00/56417
- DE-A- 10 038 932
- US-A- 4 174 281
- US-A- 4 290 998
- US-A- 4 421 874

## Beschreibung

Die Erfindung betrifft ein Verfahren zur Stofftrennung nach dem Oberbegriff des Anspruchs 1. Ferner betrifft die Erfindung eine Vorrichtung zur Stofftrennung nach dem Oberbegriff des Anspruchs 13.

Ein Verfahren und eine Vorrichtung der eingangs genannten Art ist aus der DE 100 38 932 bekannt. Bei diesem bekannten Verfahren wird das zu trennende Stoffgemisch in einen vertikal angeordneten Kanal eingeleitet und strömt unter Einwirkung des Gravitationsfeldes durch den Kanal. In dem Kanal sind mehrere Leitelemente aufeinanderfolgend angeordnet, die einen entgegen der Strömungsrichtung des Stoffgemisches in den Kanal einströmenden Waschfluidstrom durch den Kanal lenken. Dabei wird im Bereich jedes Leitelementes ein Verdrängungsbereich ausgebildet, in welchem das Waschfluid den Mengenstrom des Stoffgemisches durchströmt und dabei die abzutrennende Stoffkomponente des Stoffgemisches verdrängt und an dem Ende des Kanals, an dem das Stoffgemisch in den Kanal eingeleitet wurde, aus dem Kanal wieder abgeführt. Die zur Durchführung des Verfahrens verwendete Vorrichtung ist aufgrund der Vielzahl verwendeter Leitelemente, die, um den gewünschten Strömungseffekt des Waschfluides im Kanal zu erzeugen, entsprechend genau zueinander ausgerichtet und im Kanal positioniert sein müssen, entsprechend aufwendig gestaltet.

US-A-4 174 281 beschreibt eine Vorrichtung zur Stofftrennung mit einem Kanal, bei dem einander gegenüberliegende Eintrittsbereiche und Austrittsbereiche für das Waschfluid an der Kanalwand vorgesehen sind.

US-A-4 421 874 offenbart eine Vorrichtung, bei der das Waschfluid durch ein zentral im Kanal angeordnetes Rohr in den Kanal und durch einen radial außen liegenden Filter aus dem Kanal abgeführt wird. Der Winkel zwischen der Strömungsrichtung des Waschfluids und der Strömungsrichtung des Stoffgemisches, d.h. der Längsrichtung des Kanals beträgt 40° bis 90°.

Der Erfindung liegt die **Aufgabe** zugrunde, ein Verfahren bzw. eine Vorrichtung zur Stofftrennung zu schaffen, mit dem bzw. durch deren Einsatz auf besonders einfache Weise eine effiziente Trennung unterschiedlicher Stoffkomponenten aus dem Stoffgemisch möglich ist.

Die Aufgabe wird erfindungsgemäß durch ein Verfahren mit den Merkmalen nach Anspruch 1 gelöst. Ferner wird die Aufgabe durch eine erfindungsgemäße Vorrichtung mit den Merkmalen nach Anspruch 12 gelöst.

Vorteilhafte Weiterbildungen der Erfindung ergeben sich aus der Beschreibung, der Zeichnung sowie den jeweils zugeordneten Unteransprüchen.

Bei dem erfindungsgemäßen Verfahren wird das Stoffgemisch, insbesondere ein Stoffgemisch aus Fest- und Flüssigkomponenten zur Sedimentation zumindest annähernd parallel zum Gravitationsfeld durch den Kanal geleitet. Die Stoffkomponenten des Stoffgemisches, die sich durch ihre physikalischen Eigenschaften, insbesondere die Dichte und den Auftrieb, voneinander unterscheiden, sind im Querschnitt der Strömung betrachtet zumindest annähernd gleichmäßig im Fluidstrom des Stoffgemisches verteilt. Bei diesem Sedimentationsvorgang wird zur verbesserten Stofftrennung das Waschfluid quer zur Strömungsrichtung des Stoffgemisches durch den Kanal geleitet, d.h. unter einem solchen Winkel in den Kanal gelenkt, dass das Waschfluid den Kanal durchströmt, den Kanal jedoch bezogen auf den Fluidstrom seitlich wieder zumindest teilweise verläßt. Durch das quer in den Fluidstrom eingeleitete Waschfluid wird erreicht, dass die durch die vertikale Strömungsrichtung im Stoffgemisch gleichmäßig verteilten Stoffkomponenten aufgrund ihrer physikalischen Eigenschaften voneinander getrennt werden, wobei die abzutrennende Stoffkomponente vom Waschfluid verdrängt und aus dem Kanal abgeführt wird, während die weiteren Stoffkomponenten zwar gleichfalls durch das querströmende Waschfluid angeströmt, jedoch nicht aus dem Kanal gefördert werden. Durch das erfindungsgemäße Verfahren, einzelne Stoffkomponenten durch den vertikalen Strömungsverlauf gleichmäßig im Fluidstrom zu verteilen und mit Hilfe des quer in den Fluidstrom gelenkten Waschfluides zu trennen, wird auf elegante und sehr effektive Weise eine Stofftrennung realisiert. Insbesondere eignet sich das erfindungsgemäße Verfahren zur Waschung, zur Adsorption bzw. Desorption, zum Ionenaustausch, zum Wärmeaustausch, zur Tiefenfiltration oder auch zur Extraktion derartiger Stoffgemische. Das Verfahren kann kontinuierlich oder quasi-kontinuierlich durchgeführt werden.

Beim erfindungsgemäßen Verfahren wird vorgeschlagen, das Waschfluid von Leitelementen, die den Kanal zumindest teilweise begrenzen, in den und/oder aus dem Kanal zu leiten. Mit Hilfe der Leitelemente ist es möglich, das Waschfluid definiert in den Fluidstrom des Stoffgemisches einzuleiten, um die gewünschte Anströmung und Querdurchströmung des Stoffgemisches durch das Waschfluid zu erreichen.

Die Leitelemente sind mit ihren Flachseiten in Strömungsrichtung des Stoffgemisches gesehen derart geneigt, dass partikuläre Stoffkomponenten des Stoffgemisches, wie beispielsweise Kristalle, langkettige Moleküle und Ähnliches, die sich an den Leitelementen gegebenenfalls ablagern, aufgrund des Neigungswinkels der Leitelemente zumindest teilweise wieder in das vorbeiströmende Stoffgemisch zurückgleiten. Insbesondere wird durch die geneigte Stellung der Leitelemente erreicht, dass sich eventuell auf den Leitelementen ablagernde partikuläre Stoffkomponenten nicht soweit ansammeln können, dass die partikulären Stoffkomponeten ungewollt aus dem Kanal überlaufen und vom Waschfluid aus dem Kanal abgeführt werden.

Ergänzend zu den Leitelementen wird bei einer weiteren Verfahrensvariante vorgeschlagen, das Waschfluid durch mindestens einen den Kanal wenigstens teilweise begrenzenden, fluiddurchlässigen Flächenabschnitt in den oder aus dem Kanal zu fördern. Als fluiddurchlässiger Flächenabschnitt eignet sich insbesondere ein Filtermedium, beispielsweise eine Membran, ein Filtergewebe oder Ähnliches, das als Filter wirkt und nur für das Waschfluid und die vom Waschfluid aus dem Stoffgemisch abzuführende Stoffkomponente fluiddurchlässig ist.

Um den apparatetechnischen Aufwand bei der Stofftrennung gering zu halten, wird bei einer bevorzugten Ausführungsform des Verfahrens vorgeschlagen, das Stoffgemisch nur durch die Wirkung der Gravitation durch den Kanal zu fördern.

Alternativ ist es auch möglich, das Stoffgemisch mit Hilfe einer Fördereinrichtung, wie einer Pumpe, durch den Kanal zu fördern, wodurch eine höhere Strömungsgeschwindigkeit des Stoffgemisches im Kanal einstellbar ist und ein noch höherer Durchsatz bei der Stofftrennung möglich wird. In Abhängigkeit von dem zu trennenden Stoffgemisch ist es ferner möglich, das Stoffgemisch auch gegen die Gravitationskraft durch den Kanal zu fördern, so dass die Gravitationskräfte entgegen der Strömungsrichtung des Stoffgemisches wirken, wodurch die Stofftrennung zusätzlich verbessert wird.

Des Weiteren wird bei einer bevorzugten Verfahrensvariante vorgeschlagen, in dem Stoffgemisch eine die kontinuierliche Strömung des Stoffgemisches überlagernde oszillierende und/oder stoßartige Bewegung zu erzeugen, wodurch eine Relativbewegung insbesondere zwischen partikulären Stoffkomponenten des Stoffgemisches untereinander erzeugt, zwischenpartikuläre Bereiche verändert bzw. aufgebrochen und einer Durchströmung von dem Waschfluid zugänglich gemacht werden. Des Weiteren wird durch die überlagerte Bewegung der Ausbildung bevorzugter Strömungswege im Fluidstrom entgegenwirkt oder diese weitgehend verhindert. Weist der Fluidstrom des Stoffgemisches durch den Kanal einen runden oder ovalen Strömungsquerschnitt auf, wird ferner vorgeschlagen, im Stoffgemisch eine die kontinuierliche Strömung überlagernde rotatorische Bewegung zu erzeugen, wodurch die zuvor beschriebenen Effekte zusätzlich noch in ihren Wirkungen verstärkt werden.

Da das quer in den Kanal einströmende Waschfluid einen entsprechenden Druck auf das in Längsrichtung des Kanals strömende Stoffgemisch ausübt, wodurch das Strömungsverhalten des Stoffgemisches im Kanal beeinflusst und gegebenenfalls beeinträchtigt wird, ist es ferner von Vorteil, die Strömungsgeschwindigkeit des Waschfluides auf die Strömungsgeschwindigkeit des Stoffgemisches einzustellen. Zu diesem Zweck wird vorgeschlagen, die Strömungsgeschwindigkeit des Waschfluides bezüglich der Strömungsgeschwindigkeit des Stoffgemisches derart einzustellen, dass der Fluidstrom des Stoffgemisches durch den Kanal noch aufrechterhalten bleibt. Hierbei ist es besonders von Vorteil, wenn die Strömungsgeschwindigkeit des Waschfluides so bemessen ist, dass ein Austrag von Stoffkomponenten aus dem Kanal, die im Stoffgemisch verbleiben sollen, zumindest annähernd vollständig verhindert ist.

Bei dieser Verfahrensvariante wird ferner vorgeschlagen, die Strömungsgeschwindigkeit zusätzlich in Abhängigkeit von der vom Stoffgemisch bereits durchströmten Länge des Kanals zu reduzieren, da durch das quer einströmende Waschfluid die Strömungsgeschwindigkeit des Stoffgemisches verringert wird. Durch die gezielte Reduzierung der Einströmgeschwindigkeit des Waschfluides in den Kanal wird erreicht, dass das durch den Kanal strömende Stoffgemisch in seiner Strömungsgeschwindigkeit nur soweit abgebremst wird, dass Geschwindigkeitsunterschiede zwischen einzelnen Kanalabschnitten, die das Strömungsverhalten des Stoffgemisches durch den Kanal nachteilig beeinflussen, vermieden werden.

Die Strömungsgeschwindigkeit des Waschfluides wird bei einer besonders bevorzugten Variante des erfindungsgemäßen Verfahrens eingestellt, indem ein entsprechendes Flächenverhältnis zwischen der beim Eintritt in den Kanal vom Waschfluid durchströmten Fläche und der beim Austritt aus dem Kanal vom Waschfluid durchströmten Fläche eingestellt wird. Dabei entspricht das Flächenverhältnis zumindest annähernd dem Druckabfall, den das Waschfluid beim Durchströmen des Kanals erfährt, wodurch gleichzeitig die Strömungsgeschwindigkeit des Waschfluides, die gleichfalls vom Flächenverhältnis abhängt, beeinflusst werden kann.

Um eine besonders hohe Effektivität der Stofftrennung zu erreichen, ist es ferner von Vorteil, das Waschfluid mehrfach durch den Kanal zu fördern, wobei sich die Querströmungsrichtung des Waschfluides bei jedem erneuten Durchströmen des Kanals zumindest von der Querströmungsrichtung einer zuvor erzeugten Querströmung des Waschfluides durch den Kanal unterscheiden kann. Da das Stoffgemisch mehrfach an verschiedenen Stellen und mit vorzugsweise unterschiedlicher Querströmungsrichtung vom Waschfluid durchströmt wird, werden Konzentrationsunterschiede der Stoffkomponenten innerhalb des Fluidstroms ausgeglichen, wodurch sich eine verbesserte Entfernung der abzutrennenden Stoffkomponente bei gleichbleibendem Bedarf an Waschfluid oder eine gleichbleibende Entfernung der abzutrennenden Stoffkomponente bei reduziertem Bedarf an Waschfluid ergibt.

Einen weiteren Aspekt der Erfindung zeigt die in Anspruch 12 definierte Vorrichtung zur Stofftrennung. Mit dieser erfindungsgemäßen Vorrichtung kann das zuvor beschriebene Verfahren ausgeführt und die damit verbundenen Vorteile erzielt werden.

Beider erfindungsgemäßen Vorrichtung sind der Eintrittsbereich und der Austrittsbereich für das Waschfluid an der Kanalwand vorgesehen, wobei der Eintrittsbereich und der Austrittsbereich quer zur Längsrichtung des Kanals gesehen einander zumindest abschnittsweise direkt oder versetzt gegenüberliegen. Durch diese Anordnung des Eintrittsund Austrittsbereiches wird erreicht, dass das Waschfluid quer zur Strömungsrichtung des Stoffgemisches durch den Kanal geleitet werden kann, wobei die Strömungsgeschwindigkeit des Waschfluides beispielsweise durch eine gezielte Einstellung eines Druckunterschiedes zwischen dem Eintrittsbereich und dem Austrittsbereich einstellbar ist.

Der Eintrittsbereich und/oder der Austrittsbereich weist mehrere Leitelemente auf, mit denen der Waschfluidstrom in den und/oder aus dem Kanal gezielt gelenkt werden kann.

Die Leitelemente verlaufen mit ihren Flachseiten in einem vorgegebenen Winkel in Strömungsrichtung des Stoffgemisches zur Längsrichtung des Kanals geneigt. Hierdurch wird erreicht, dass das Waschfluid unter dem vorgegebenen Winkel, jedoch in Strömungsrichtung des Stoffgemisches in den Kanal einströmt, wodurch unerwünschte Verwirbelungen des Fluidstroms des Stoffgemisches vermieden werden.

Wird die erfindungsgemäße Vorrichtung auch zur Stofftrennung von Stoffgemischen mit partikulären Stoffkomponenten verwendet, ist es ferner von Vorteil, wenn der vorgegebene Winkel, mit dem die Leitelemente geneigt zur Längsrichtung des Kanals verlaufen, einem Schüttwinkel der entsprechenden partikulären Stoffkomponente des Stoffgemisches entspricht, bei dem ein Ablagern der partikulären Stoffkomponente auf den Leitelementen zumindest annähernd vollständig verhindert ist. Auf diese Weise wird vermieden, dass sich die partikulären Stoffkomponenten an den Leitelementen ablagern und gegebenenfalls vom Waschfluid aus dem Kanal abtransportiert werden.

Um die Strömungsgeschwindigkeit des Waschfluides und die Einströmrichtung des Waschfluides zusätzlich verändern zu können, ist es ferner von Vorteil, wenn der Abstand, der vorzugsweise parallel zueinander angeordneten Leitelemente und/oder der vorgegebene Winkel, mit dem die Leitelemente zur Längsrichtung des Kanals geneigt verlaufen, variabel einstellbar ist.

Damit der Fluidstrom des Stoffgemisches im Kanal einen ovalen oder runden Strömungsquerschnitt besitzt, wird bei einer bevorzugten Ausführungsform vorgeschlagen, den Kanal zumindest im Eintrittsbereich und/oder im Austrittsbereich im Querschnitt oval oder rund zu gestalten. Bei dieser Ausführungsform sind die Leitelemente ringförmig oder ringsegmentförmig ausgebildet und zumindest abschnittsweise konzentrisch zum Kanal angeordnet.

Alternativ wird vorgeschlagen, den Kanal im Eintrittsbereich und/oder im Austrittsbereich eine mehreckige Querschnittsform zu geben, wobei die Leitelemente bei dieser. Form des Kanals streifenförmig ausgebildet sind.

Um das Strömungsverhalten des Waschfluides in den Kanal zusätzlich zu beeinflussen, wird ferner vorgeschlagen, die Leitelemente in Längsrichtung des Kanals gewölbt auszubilden, wodurch der Entstehung von Verwirbelungen im Waschfluid vorgebeugt wird.

Ergänzend zuden zuvor beschriebenen Leitelementen wird vorgeschlagen an dem Eintrittsbereich oder an dem Austrittsbereich einen fluiddurchlässigen Flächenabschnitt vorzusehen, der von dem Waschfluid und gegebenenfalls auch von der abzutrennenden Stoffkomponente durchströmbar ist. Auf diese Weise ist es möglich, insbesondere wenn das Stoffgemisch partikuläre Stoffkomponenten enthält, einen Austrag der partikulären Stoffkomponenten aus dem Fluidstrom gezielt zu verhindern.

Zur Beeinflussung der Strömungsgeschwindigkeit des Waschfluides wird vorgeschlagen, die vom Waschfluid durchströmte Fläche des Eintrittsbereiches kleiner auszubilden als die vom Waschfluid durchströmbare Fläche des Austrittsbereiches, wodurch eine Reduzierung der Strömungsgeschwindigkeit des Waschfluides beim Durchqueren des Kanals erreicht wird und auf diese Weise unerwünschte Verwirbelungen im Fluidstrom des Stoffgemisches verhindert werden.

Soll das Waschfluid mehrfach zur Stofftrennung verwendet werden, ist es ferner von Vorteil, wenn am Kanal mehrere Eintrittsbereiche und Austrittsbereiche ausgebildet sind, wobei jedem Eintrittsbereich ein Austrittsbereich zugeordnet ist, in Längsrichtung des Kanals betrachtet jeweils ein Eintrittsbereich mit zugeordnetem Austrittsbereich einem Eintrittsbereich mit zugeordnetem Austrittsbereich folgt und der jeweils folgende Eintrittsbereich an der dem diesen vorgeordneten Eintrittsbereich gegenüberliegenden Kanalwand vorgesehen ist. Hierdurch wird erreicht, dass das Waschfluid kreuzförmig, d.h. miteinander entgegengesetzt verlaufenden Querströmungsrichtungen an unterschiedlichen Kanalabschnitten durch den Kanal und damit durch den Fluidstrom des Stoffgemisches hindurchströmt, wodurch sich eine noch weiter verbesserte Entfernung der abzutrennenden Stoffkomponente aus dem Stoffgemisch ergibt.

Für eine mehrfache Durchströmung mit demselben Waschfluid wird ferner vorgeschlagen, einen stromabwärts ausgebildeten Austrittsbereich mit einem diesem gegenüber stromaufwärts ausgebildeten Eintrittsbereich zu verbinden, wodurch zusätzlich eine Gegenstromstofftrennung realisert wird.

Nachfolgend wird die Erfindung anhand bevorzugter Ausführungsbeispiele unter Bezugnahme auf die Zeichnung näher erläutert. Darin zeigen:
- Fig. 1: eine schematische Schnittansicht eines ersten Ausführungsbeispieles einer Vorrichtung zur Stofftrennung beim Betrieb nach einer ersten Verfahrensvariante;
- Fig. 2: eine schematische Schnittansicht der Vorrichtung nach Fig. 1 beim Betrieb nach einer zweiten Verfahrensvariante;
- Fig. 3: eine schematische Schnittansicht einer zweiten Ausführungsform einer Vorrichtung zur Stofftrennung bei Betrieb nach einer dritten Verfahrensvariante;
- Fig. 4: eine schematische Schnittansicht der Vorrichtung nach Fig. 3 bei Betrieb nach einer vierten Verfahrensvariante und
- Fig. 5: eine schematische Schnittansicht eines dritten Ausführungsbeispiels einer Vorrichtung zur Stofftrennung beim Betrieb nach einer fünften Verfahrensvariante.

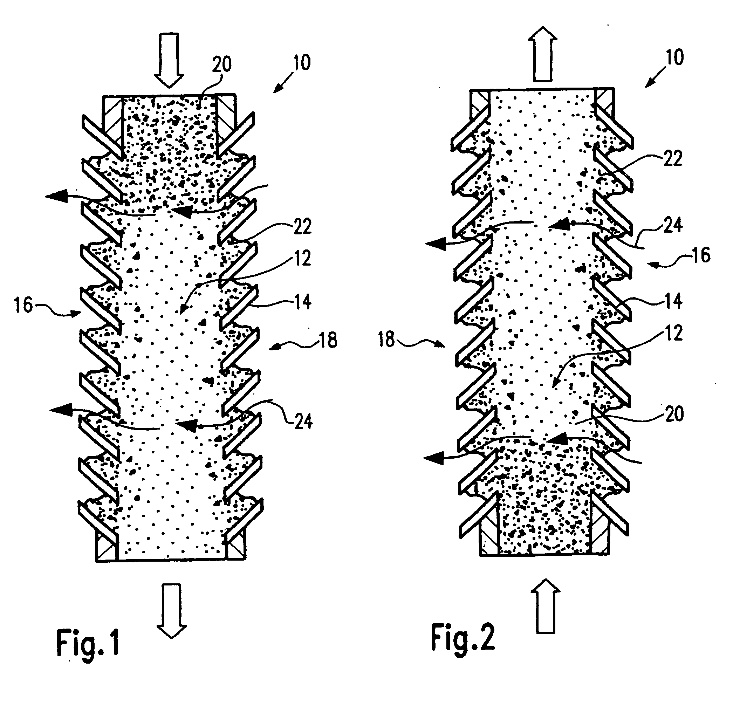

Fig. 1 zeigt in stark schematisierter Darstellung eine Schnittansicht einer Vorrichtung 10 zur Stofftrennung. Die Vorrichtung 10 weist einen Kanal 12 auf, der mit seiner Längsrichtung zumindest annähernd parallel zum Gravitationsfeld der Erde verläuft. Der Kanal 12 ist bei dem dargestellten Ausführungsbeispiel im Querschnitt rund. Ein Abschnitt des Kanals 12 wird durch mehrere ringförmige Leitelemente 14 gebildet, die mit gleichbleibendem Abstand in Längsrichtung des Kanals 12 aufeinanderfolgend angeordnet sind. Die Leitelemente 14 sind durch nicht dargestellte Trennbleche in einen in Fig. 1 links dargestellten ersten Bereich 16 und in einen in Fig. 1 rechts dargestellten zweiten Bereich 18 untergliedert.

Die von den Leitelementen 14 definierten Öffnungen der beiden Bereiche 16 und 18 stehen jeweils mit einem nicht dargestellten Fluidkanal für ein Waschfluid in Verbindung, wobei die beiden Fluidkanäle beispielsweise durch einen konzentrisch um die Vorrichtung 10 angeordnetes Rohr (nicht dargestellt) gebildet sein können, dass wie die Bereiche 16 und 18 in zwei voneinander getrennte Strömungsbereiche untergliedert ist.

Wird nun die Vorrichtung 10 nach einer ersten Verfahrensvariante betrieben, wird ein Stoffgemisch 20, das einen sedimentartigen Charakter aufweist und neben mindestens einer partikulären Stoffkomponente 22 auch mindestens eine flüssige Stoffkomponente beinhaltet, in den Kanal 12 geleitet, wobei die Strömungsgeschwindigkeit des Stoffgemisches 20 durch den Kanal 12 nur durch die Gravitationskraft verursacht ist, wie durch die Pfeile am Eintritts- und am Austrittsende des Kanals 12 angedeutet ist. In diesem Zusammenhang wird unter dem Begriff Fluidstrom auch ein Sedimentstrom des Stoffgemisches 20 verstanden.

Wie in Fig. 1 erkennbar, sind die Leitelemente 14 in Strömungsrichtung des Stoffgemisches 20 unter einem Winkel geneigt angeordnet, wobei die Wirkungsweise der geneigten Anordnung später noch erläutert wird.

Strömt nun das Stoffgemisch 20 durch den Kanal 12, wird ein Waschfluid 24 in den bei dieser Verfahrensvariante als Eintrittsbereich dienenden zweiten Bereich 18 eingeleitet, das quer zur Strömungsrichtung des Stoffgemisches 20 durch den Kanal 12 hindurchströmt und aus dem als Austrittsbereich dienenden ersten Bereich 16 des Kanals 12 austritt, wie durch die Pfeile angedeutet ist. Als Waschfluid 24 wird eine Flüssigkeit eingesetzt, deren Dichte sich von der Dichte der partikulären Stoffkomponente 22 unterscheidet. Auf diese Weise kann mit Hilfe des Waschfluides 24 mindestens eine weitere Stoffkomponete des Stoffgemisches 20, die aus dem Stoffgemisch 20 abgetrennt werden soll, von dem Waschfluid 24 im Kanal 12 verdrängt und durch den ersten Bereich 16 aus dem Kanal 20 abgeführt werden.

Durch die auftretende Querströmung des Waschfluides 24 werden teilweise auch partikuläre Stoffkomponenten 22 mitgeführt, die sich an den geneigt angeordneten Leitelementen 14 ablagern. Die Leitelemente 14 sind jedoch bezüglich der Längsrichtung des Kanals so geneigt angeordnet, dass deren Neigungswinkel zumindest annähernd dem Schüttwinkel der partikulären Stoffkomponente 22 entspricht, also einem Winkel, bei dem ab einer bestimmten Menge an abgelagerten Partikeln die Partikel der partikulären Stoffkomponente 22 auf dem Leitelement 14 zu gleiten beginnen und von dem vorbeiströmenden Fluidstrom des Stoffgemisches 20 erneut mitgerissen werden. Durch die geneigte Stellung der Leitelemente 14 wird einerseits weitgehend verhindert, dass partikuläre Stoffkomponenten 22 versehentlich vom Waschfluid 24 mitgerissen und aus dem Kanal 12 abgeführt werden, sowie andererseits Raum geschaffen, in welchem mitgerissene Stoffteilchen sedimentieren und zurückgeleitet werden können.

Bei der zuvor beschriebenen Verfahrensvariante beruht die Strömungsgeschwindigkeit des Stoffgemisches 20 ausschließlich auf der Gravitationskraft. Bei einer abgewandelten Verfahrensvariante wird ferner vorgeschlagen, die Strömung des Stoffgemisches 20 zusätzlich durch eine oszillierende, stoßartige bzw. pulsierende und/oder rotatorische Bewegung zu überlagern. Durch die zusätzliche Geschwindigkeitskomponente erfahren insbesondere die Partikel der partikulären Stoffkomponente 22 zumindest zeitweise eine Relativbewegung zueinander, wodurch zwischenpartikuläre Bereiche verändert bzw. aufgebrochen und einer Durchströmung von dem Waschfluid 24 zugängig gemacht werden. Darüber hinaus wird die Ausbildung bevorzugter Strömungswege des Stoffgemisches 20 im Fluidstrom vollständig oder zumindest weitgehend verhindert.

In Fig. 2 ist die zuvor beschriebene Vorrichtung 10 bei Verwendung gemäß einer zweiten Variante des erfindungsgemäßen Verfahrens gezeigt. Hierzu wird die Vorrichtung 10 um 180° um die Horizontale geschwenkt, so dass die ringförmigen Leitelemente 14 mit ihrer Innenbohrung nach oben zeigen, während die Außenkante jedes Leitelementes 14 nach unten zeigt. Bei dieser Verfahrensvariante wird das Stoffgemisch 20 von unten entgegen der Gravitationskraft durch den Kanal 12 gefördert, wobei auch hier die vertikale Bewegung zusätzlich durch eine oszillierende, stoßartige oder rotatorische Bewegung überlagert sein kann. Des weiteren wird das Waschfluid 24 bei diesem Ausführungsbeispiel durch den als Eintrittsbereich dienenden ersten Bereich 16 der Vorrichtung 10 in den Kanal 12 gefördert und tritt aus dem als Austrittsbereich dienenden zweiten Bereich 18 aus dem Kanal 12 wieder aus. Auch hier wird die abzutrennende Stoffkomponente durch das Waschfluid 24 aus dem Stoffgemisch 20 verdrängt und aus dem Kanal 12 durch den zweiten Bereich 18 abgeführt. Diese Anordnung ist vorteilhaft, wenn der Feststoff leichter als die Flüssigkeit ist, wie etwa bei Eiskristallen in Wasser. Der Feststoff sedimentiert dann nach oben.

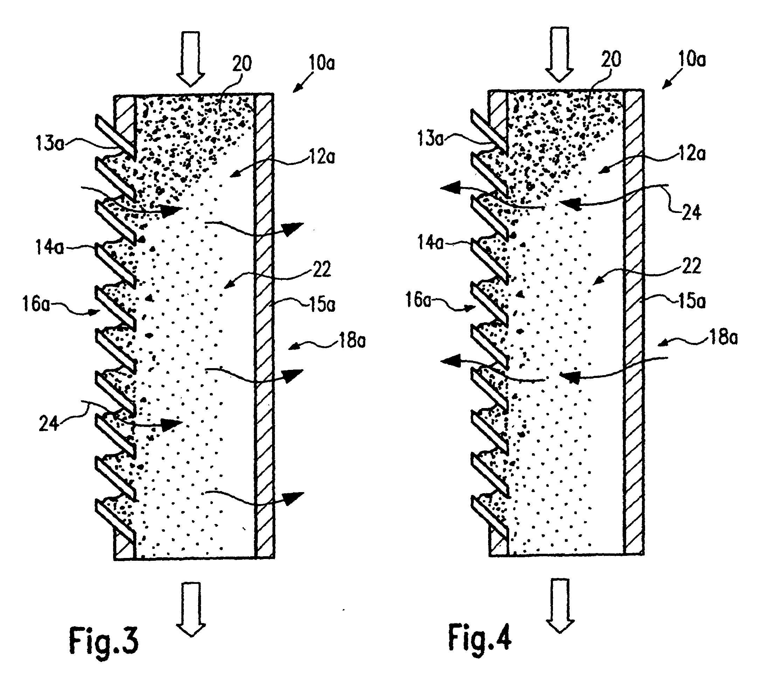

In Fig. 3 ist in stark schematischer Darstellung ein zweites Ausführungsbeispiel einer Vorrichtung 10a zur Stofftrennung dargestellt. Bei diesem zweiten Ausführungsbeispiel weist die Vorrichtung 10a einen Kanal 12a mit etwa rechteckigem Strömungsquerschnitt auf. An der in Fig. 3 links dargestellten Seitenwand des Kanals 12a ist eine rechteckige Öffnung 13a ausgebildet, in die streifenförmige Leitelemente 14a eingesetzt sind. Die Leitelemente 14a sind durch eine nicht dargestellte Stellvorrichtung in ihrem Neigungswinkel bezüglich der Längsrichtung des Kanals 12a verstellbar. Des Weiteren kann durch dieselbe Stellvorrichtung der Abstand der parallel zueinander verlaufenden Leitelemente 14a verändert werden. Ferner können mehrere der Leitelemente 14a unabhängig von den anderen Leitelementen 14a verstellt werden, so dass der Öffnungsquerschnitt der Öffnung 13a verändert werden kann.

Die den Leitelementen 14a gegenüber angeordnete Kanalwand ist mit einem fluiddurchlässigen Filtermedium 15a, beispielsweise einer Membran, einem Filtergewebe oder Ähnlichem, versehen. Die Öffnung 13a bildet den ersten Bereich 16a des Kanals 12a, der mit einer nicht dargestellten Fluidleitung für das Waschfluid 24 verbunden ist. Der von dem Filtermedium 15a gebildete zweite Bereich 18a ist gleichfalls mit einer Fluidleitung für das Waschfluid 24 verbunden.

Bei Betrieb der Vorrichtung 10a nach einer dritten Verfahrensvariante wird das Stoffgemisch 20 in vertikaler Richtung durch den Kanal 12a geleitet, wobei das Stoffgemisch 20 ausschließlich verursacht durch die Gravitationskraft durch den Kanal 12a hindurchströmt. Sobald das Stoffgemisch 20 durch den Kanal 12a strömt, wird Waschfluid 24 durch den als Eintrittsbereich dienenden ersten Bereich 16a, also durch die Öffnung 13a in den Kanal 12a geleitet, wobei die Leitelemente 14a die Strömungsrichtung des Waschfluides 24 vorgeben. Das Waschfluid 24 strömt durch den Kanal 20a quer zur Strömungsrichtung des Stoffgemisches 20 und tritt aus dem den Austrittsbereich bildenden Filtermedium 15a wieder aus, wie durch die Pfeile angedeutet ist. Das Filtermedium 15a ist dabei so ausgebildet, dass es ausschließlich für das Waschfluid 24 und für die mindestens eine aus dem Stoffgemisch 20 abzutrennende Stoffkomponente durchlässig ist. Sobald das Waschfluid 24 in den Kanal 20a eintritt, verdrängt es die abzutrennende Stoffkomponente aus dem Stoffgemisch 20 und transportiert diese durch das Filtermedium 15a aus dem Kanal 12a.

Da das Filtermedium 15a nur für das Waschfluid 24 und die abzutrennende Stoffkomponente durchlässig ist, verbleiben insbesondere die partikulären Stoffkomponenten 22 im Kanal 12a, wodurch eine besonders hohe Leistung bei der Stofftrennung erzielt wird.

Soll die Strömungsrichtung des Waschfluides 24 in dem Kanal 12a geändert oder die Strömungsgeschwindigkeit des Waschfluides 24 verringert bzw. erhöht werden, können die Leitelemente 14a mit Hilfe der Stelleinrichtung sowohl in ihrem Neigungswinkel als auch in ihrem Abstand zueinander verstellt werden, so dass die Vorrichtung 10a auf unterschiedliche Stoffgemische 20 mit unterschiedlichen physikalischen Eigenschaften flexibel eingestellt werden kann.

In Fig. 4 ist die Vorrichtung 10a bei Verwendung gemäß einer vierten Verfahrensvariante dargestellt. Diese vierte Verfahrensvariante unterscheidet sich gegenüber der unter Bezugnahme auf Fig. 3 beschriebenen Verfahrensvariante nur dadurch, dass das Waschfluid 24 durch das in diesem Fall als Eintrittsbereich dienende Filtermedium 15a in den Kanal 12a einströmt und aus der als Austrittsbereich dienenden Öffnung 13a abströmt.

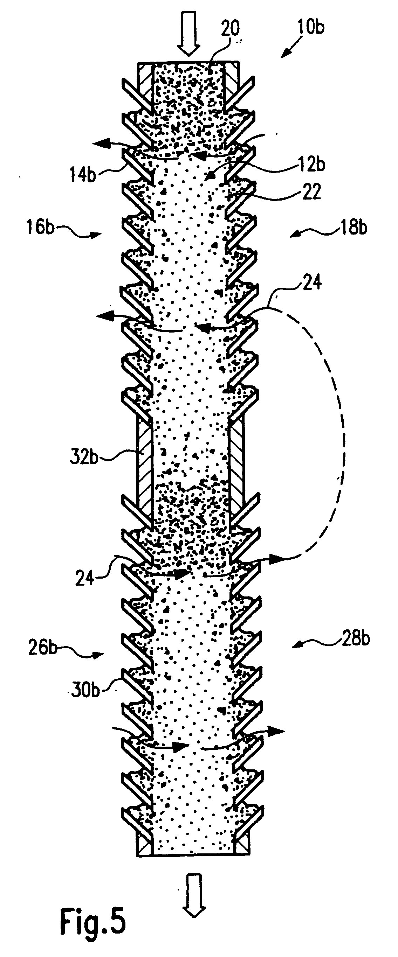

In Fig. 5 ist ein drittes Ausführungsbeispiel einer Vorrichtung 10b zur Stofftrennung gezeigt. Diese Vorrichtung 10b entspricht im Wesentlichen der unter Bezugnahme auf die Fig. 1 und 2 beschriebenen Vorrichtung 10, wobei bei der Vorrichtung 10b jedoch zwei der Vorrichtungen 10 aufeinanderfolgend angeordnet sind und einen gemeinsamen Kanal 12b bilden. Die Vorrichtung 10b weist somit einen ersten und einen zweiten Bereich 16b und 18b mit Leitelementen 14b sowie einen dritten und vierten Bereich 26b und 28b mit Leitelementen 30b auf, wobei zwischen den Leitelementen 14b und 30b ein Rohrabschnitt 32b angeordnet ist.

Auch bei dieser Verfahrensvariante wird das Stoffgemisch 20 durch die Wirkung der Gravitationskraft durch den Kanal 12b gefördert. Gleichzeitig wird in dem in Fig. 5 links unten dargestellten dritten Bereich 26b Waschfluid 24 in den Kanal 12b eingeleitet, das aus dem vierten Bereich 28b aus dem Kanal 12b wieder austritt, wobei die aus dem Stoffgemisch 20 abzutrennende Stoffkomponente aus dem Kanal 12b abtransportiert wird. Das aus dem vierten Bereich 28b austretende Waschfluid 24 wird jedoch nicht abgeleitet, sondern vielmehr dem in Fig. 5 oben rechts dargestellten zweiten Bereich 18b zugeführt, durch den es in den Kanal 12b einströmt und anschließend aus dem ersten Bereich 16b aus dem Kanal 12b erneut austritt. Durch diese Verfahrensvariante wird das Waschfluid 24 mehrfach durch den Fluidstrom des Stoffgemisches 20 geleitet, wobei gleichzeitig eine Gegenstromführung des Waschfluides 24, d.h. entgegen der Strömungsrichtung des Stoffgemisches 20, realisiert wird. Auf diese Weise werden mehrere Effekte erzielt. Einerseits wird durch die unterschiedlichen Querströmungsrichtungen des Waschfluides 24 durch den Kanal 12b erreicht, dass durch die Verdrängung der abzutrennenden Stoffkomponente eventuell im Stoffgemisch 20 entstehende Konzentrationsunterschiede ausgeglichen werden. Andererseits werden eventuell entstehende Beeinflussungen im Strömungsverhalten des Fluidstroms des Stoffgemisches 20, die durch die Querströmung des Waschfluids verursacht sind, zumindest teilweise wieder ausgeglichen.

Die zuvor beschriebenen Vorrichtungen und die zuvor beschriebenen Verfahrensvarianten werden insbesondere zur Waschung, zur Adsorption bzw. Desorption, zum Ionenaustausch, zum Wärmeaustausch, zur Tiefenfiltration oder auch zur Extraktion eingesetzt. Ferner werden insbesondere Stoffgemische mit Sedimentcharakter mit den erfindungsgemäßen Vorrichtungen und Verfahren verarbeitet, die zwar vorrangig partikuläre Stoffkomponenten beinhalten, jedoch fließfähige Eigenschaften zeigen, die den von Flüssigkeiten entsprechen.

## Patentansprüche

1. Verfahren zur Stofftrennung, bei dem
- ein Stoffgemisch (20) in einer zumindest annähernd parallel zum Gravitationsfeld verlaufenden Strömungsrichtung durch einen Kanal (12) geleitet wird und
- durch den Kanal (12) in einer Richtung quer zur Strömungsrichtung des Stoffgemisches (20) ein Waschfluid (24) gefördert wird, das aus dem Stoffgemisch (20) zumindest eine abzutrennende Stoffkomponente des Stoffgemisches (20) verdrängt und aus dem Kanal (12) abführt,
**dadurch gekennzeichnet,**
- **dass** das Waschfluid (24) in den und/oder aus dem Kanal (12) mittels den Kanal (12) zumindest teilweise begrenzenden Leitelementen (14, 30) geleitet wird, die parallel mit Abstand zueinander angeordnet sind und in einem vorgegebenen Winkel geneigt zur Strömungsrichtung des Stoffgemisches (20) verlaufen.

2. Verfahren nach Anspruch 1,
**dadurch gekennzeichnet,**
**dass** die Leitelemente (14, 30) mit ihren Flachseiten in Strömungsrichtung des Stoffgemisches (20) gesehen derart geneigt werden, dass partikuläre Stöffkomponenten (22) des Stoffgemisches (20), die sich an den Leitelementen (14, 30) gegebenenfalls ablagern, zumindest teilweise wieder in das vorbeiströmende Stoffgemisch (20) zurückgleiten.

3. Verfahren nach Anspruch 1 oder 2,
**dadurch gekennzeichnet,**
**dass** das Waschfluid (24) durch mindestens einen den Kanal (12) wenigstens teilweise begrenzenden, fluiddurchlässigen Flächenabschnitt, vorzugsweise durch ein Filtermedium (15), in den und/oder aus dem Kanal (12) gefördert wird.

4. Verfahren nach einem der Ansprüche 1 bis 3,
**dadurch gekennzeichnet,**
**dass** das Stoffgemisch (20) aufgrund von Gravitation durch den Kanal (12) strömt.

5. Verfahren nach einem der Ansprüche 1 bis 3,
**dadurch gekennzeichnet,**
**dass** das Stoffgemisch (20), gegebenenfalls auch gegen die Gravitationskraft, durch den Kanal (12) gefördert wird.

6. Verfahren nach einem der Ansprüche 1 bis 5,
**dadurch gekennzeichnet,**
**dass** in dem Stoffgemisch (20) eine die kontinuierliche Strömung des Stoffgemisches (20) überlagernde oszillierende, stoßartige und/oder rotatorische Bewegung erzeugt wird.

7. Verfahren nach einem der Ansprüche 1 bis 6,
**dadurch gekennzeichnet,**
**dass** die Strömungsgeschwindigkeit des Waschfluids (24) bezüglich der Strömungsgeschwindigkeit des Stoffgemisches (20) derart eingestellt wird, dass der Fluidstrom des Stoffgemisches (20) durch den Kanal (12) noch aufrechterhalten bleibt und vorzugsweise ein Austrag der Stoffkomponente bzw. Stoffkomponenten, die im Stoffgemisch (20) verbleiben soll bzw. sollen, aus dem Kanal (14) zumindest annähernd vollständig verhindert ist.

8. Verfahren nach Anspruch 7,
**dadurch gekennzeichnet,**
**dass** die Strömungsgeschwindigkeit des Waschfluides (24) in Abhängigkeit von der vom Stoffgemisch (20) bereits durchströmten Länge des Kanals (12) reduziert wird.

9. Verfahren nach einem der vorhergehenden Ansprüche,
**dadurch gekennzeichnet,**
**dass** die Strömungsgeschwindigkeit des Waschfluides (24) durch den Kanal (12) entsprechend dem Flächenverhältnis zwischen der beim Eintritt in den Kanal (12) vom Waschfluid (24) durchströmten Fläche (16, 18) und der beim Austritt aus dem Kanal (12) vom Waschfluid (24) durchströmten Fläche (16, 18) eingestellt wird.

10. Verfahren nach einem der vorhergehenden Ansprüche,
**dadurch gekennzeichnet,**
- **dass** das Waschfluid (24) mehrfach durch den Kanal (12) gefördert wird und
- **dass** sich die Querströmungsrichtung des Waschfluides (24) bei jedem erneuten Durchströmen des Kanals (12) vorzugsweise von der Querströmungsrichtung zumindest einer zuvor erzeugten Querströmung des Waschfluides (24) durch den Kanal (12), besonders bevorzugt zumindest von der Querströmungsrichtung der unmittelbar zuvor erzeugten Querströmung, unterscheidet.

11. Verfahren nach einem der vorhergehenden Ansprüche,
**dadurch gekennzeichnet,**
**dass** in dem Kanal (12) ein im Strömungsquerschnitt mehreckiger, runder oder ovaler Fluidstrom des Stoffgemisches (20) erzeugt wird.

12. Vorrichtung zur Stofftrennung, insbesondere zur Durchführung des Verfahrens nach einem der vorhergehenden Ansprüche 1 bis 11,
mit mindestens einem Kanal (12) zum Durchleiten eines zu trennenden Stoffgemisches (20), der mindestens einen Eintrittsbereich (16, 18) und mindestens einen Austrittbereich (18, 16) für ein Waschfluid (24) zum Verdrängen einer aus dem Stoffgemisch (20) abzutrennenden Stoffkomponente aus dem Kanal (12) aufweist, wobei
- der Eintrittsbereich (16, 18) und der Austrittsbereich (18, 16) an der Kanalwand vorgesehen sind und
- der Eintrittsbereich (16, 18) und der Austrittsbereich (18, 16) quer zur Längsrichtung des Kanals (12) gesehen einander zumindest abschnittsweise direkt oder versetzt gegenüberliegen,
**dadurch gekennzeichnet,**
- **dass** der Eintrittsbereich (16, 18) und/oder der Austrittsbereich (18, 16) mehrere Leitelemente (14) zum Lenken des Waschfluidstroms in den und/oder aus dem Kanal (12) aufweist,
- **dass** die Leitelemente (14) parallel mit Abstand zueinander angeordnet sind und
- **dass** die Leitelemente (14) zur Längsrichtung des Kanals (12) in einem vorgegebenen Winkel geneigt angeordnet sind.

13. Vorrichtung nach Anspruch 12,
**dadurch gekennzeichnet,**
**dass** der vorgegebene Winkel vorzugsweise einem Schüttwinkel einer partikulären Stoffkomponente (22) des Stoffgemisches (20) entspricht, bei dem ein Ablagern der partikulären Stoffkomponenten (22) auf den Leitelementen (14) zumindest annähernd vollständig verhindert ist.

14. Vorrichtung nach Anspruch 12 oder 13,
**dadurch gekennzeichnet,**
**dass** der Abstand zwischen den Leitelementen (14) und/oder der vorgegebene Winkel zumindest eines der Leitelemente (14) variabel einstellbar ist.

15. Vorrichtung nach Anspruch 12, 13 oder 14,
**dadurch gekennzeichnet,**
- **dass** der Kanal (12) zumindest im Eintrittsbereich (16, 18) und/ oder im Austrittsbereich (18, 16) eine ovale oder runde Querschnittsform aufweist und
- **dass** die Leitelemente (14) ringförmig oder ringsegmentförmig ausgebildet und zumindest abschnittsweise konzentrisch zum Kanal (12) angeordnet sind.

16. Vorrichtung nach Anspruch 12, 13 oder 14,
**dadurch gekennzeichnet,**
- **dass** der Kanal (12) zumindest im Eintrittsbereich (16, 18) und/ oder im Austrittsbereich (18, 16) eine mehreckige Querschnittsform aufweist und
- **dass** die Leitelemente (14) streifenförmig ausgebildet sind.

17. Vorrichtung nach einem der Ansprüche 12 bis 16,
**dadurch gekennzeichnet,**
**dass** die Leitelemente (14, 12) in Längsrichtung des Kanals (12) gesehen gewölbt sind.

18. Vorrichtung nach einem der Ansprüche 12 bis 17,
**dadurch gekennzeichnet,**
**dass** an dem Eintrittsbereich (16, 18) und/oder an dem Austrittsbereich (18, 16) mindestens ein fluiddurchlässiger Flächenabschnitt, vorzugsweise ein Filtermedium (15), vorgesehen ist, der von dem Waschfluid (24) und gegebenenfalls auch von der abzutrennenden Stoffkomponente durchströmbar ist.

19. Vorrichtung nach einem der Ansprüche 12 bis 18,
**dadurch gekennzeichnet,**
**dass** die vom Waschfluid (24) durchströmbare Fläche des Eintrittsbereiches (16, 18) kleiner ist als die vom Waschfluid (24) durchströmbare Fläche des Austrittsbereiches (16, 18).

20. Vorrichtung nach einem der Ansprüche 12 bis 19,
**dadurch gekennzeichnet,**
- **dass** am Kanal (12) mehrere Eintrittsbereiche (26, 18) und Austrittsbereiche (28, 16) ausgebildet sind, wobei jedem Eintrittsbereich (26, 18) ein Austrittsbereich (28, 16) zugeordnet ist, und
- **dass** in Längsrichtung des Kanals betrachtet jeweils ein Eintrittsbereich (18) mit zugeordnetem Austrittsbereich (16) einem Eintrittsbereich (26) mit zugeordnetem Austrittsbereich (28) folgt, wobei der jeweils folgende Eintrittsbereich (26) an der dem diesen vorgeordneten Eintrittsbereich (18) gegenüberliegenden Kanalwand vorgesehen ist.

21. Vorrichtung nach Anspruch 20,
**dadurch gekennzeichnet,**
**dass** der in Strömungsrichtung des Stoffgemisches (20) gesehen stromabwärts angeordnete Austrittsbereich (28) mit dem gegenüber diesem unmittelbar stromaufwärts angeordneten Eintrittsbereich (18) in Strömungsverbindung steht.

## Claims

1. Method for separating materials, in which
- a mixture of materials (20) is guided through a channel (12) in a flow direction extending at least approximately parallel to the gravitational field and
- a wash fluid (24) is conveyed through the channel (12) in a direction transverse to the flow direction of the mixture of materials (20), which displaces from the mixture of materials (20) and removes from the channel (12) at least one material component of the mixture of materials that is to be separated,
**characterized in that**
- the wash fluid (24) is guided into and/or out of the channel (12) by means of guide elements (14, 30) which limit the channel at least partially and are arranged parallel at a distance to each other and extend at a predetermined angle in a inclined fashion with respect to the flow direction of the mixture of materials (20).

2. Method according to claim 1,
**characterized in that**
seen in flow direction of the mixture of materials (20) the guide elements (14, 30) are inclined with their flat sides in such a manner that particulate material components (22) of the mixture of materials (20), which may deposit on the guide elements (14, 30), at least partially slide back again into the mixture of materials (20) passing by.

3. Method according to claim 1 or 2,
**characterized in that**
the wash fluid (24) is conveyed into and/or out of the channel (12) through at least one fluid-permeable surface section, preferably through a filter medium (15), that limits the channel (12) at least partially.

4. Method according to any one of claims 1 to 3,
**characterized in that**
the mixture of materials (20) flows through the channel (12) as a result of gravitation.

5. Method according to any one of claims 1 to 3,
**characterized in that**
if required the mixture of materials (20) is also conveyed through the channel (12) in the opposite direction to the gravitational force.

6. Method according to any one of claims 1 to 5,
**characterized in that**
in the mixture of materials (20) an oscillating, intermittent and/or rotatory movement is generated that overlaps the continuous flow of the mixture of materials (20).

7. Method according to any one of claims 1 to 6,
**characterized in that**
the flow rate of the wash fluid (24) is adjusted with respect to the flow rate of the mixture of materials (20) in such a way that the fluid flow of the mixture of materials (20) through the channel (12) is still maintained and preferably a removal of the material component respectively components from the channel, which shall or should remain in the mixture of materials (20), is prevented at least in an approximately complete manner.

8. Method according to claim 7,
**characterized in that**
the flow rate of the wash fluid (24) is reduced as a function of the length of the channel through which the mixture of materials has already been flowed.

9. Method according to any one of the previous claims,
**characterized in that**
the flow rate of the wash fluid (24) through the channel (12) is adjusted according to the surface ratio between the surface (16, 18) flowed through by the wash fluid (24) when entering the channel (12) and the surface (16, 18) flowed through by the wash fluid (24) when leaving the channel (12).

10. Method according to any one of the previous claims,
**characterized in that**
- the wash fluid (24) is conveyed through the channel repeatedly and
- with each renewed flowing through the channel the transverse flow direction of the wash fluid (24) preferably differs from the transverse flow direction of at least one previously generated transverse flow of the wash fluid (24) through the channel (12), particularly preferred at least from the transverse flow direction of the transverse flow generated immediately before.

11. Method according to any one of the previous claims,
**characterized in that**
in the channel (12) a fluid flow of the mixture of materials (20) is generated, which is polygonal, circular or oval in flow cross-section.

12. Device for separating materials, in particular for carrying out the method according to any one of claims 1 to 11,
comprising at least a channel (12) for guiding through a mixture of materials (20) to be separated, which includes at least one inlet area (16, 18) and at least one outlet area (18, 16) for a wash fluid (24) in order to displace from the channel (12) a material component to be separated from the mixture of materials (20),
wherein
- the inlet area (16, 18) and the outlet area (16, 18) are provided at the channel wall and
- seen transversely to the longitudinal direction of the channel (12) the inlet area (16, 18) and the outlet area (18, 16) face each other in a direct or offset manner at least in sections.
**characterized in that**
- the inlet area (16, 18) and/or the outlet area (16, 18) include a plurality of guide elements (14) for guiding the flow of the wash fluid into and/or out of the channel (12),
- the guide elements (14) are arranged parallel at a distance to each other and
- the guide elements (14) are arranged in an inclined fashion at a predetermined angle to the longitudinal direction of the channel (12).

13. Device according to claim 12,
**characterized in that**
the predetermined angle preferably corresponds to a repose angle of a particulate material component (22) of the mixture of materials (20) at which a deposition of the particulate material components (22) on the guide elements (14) is prevented at least in an approximately complete manner.

14. Device according to claim 12 or 13,
**characterized in that**
the distance between the guide elements (14) and/or the predetermined angle of at least one of the guide elements (14) can be adjusted variably.

15. Device according to any one of claims 12 to 14
**characterized in that**
- the channel (12) has an oval or circular cross-sectional form at least in the inlet area (16, 18) and/or in the outlet area (18, 16) and
- the guide elements (14) are designed in a ring-shaped or ring-segment-shaped fashion and arranged concentrically to the channel (12) at least in sections.

16. Device according to any one of claims 12 to 14
**characterized in that**
- the channel (12) has a polygonal cross-sectional form at least in the inlet area (16, 18) and/or in the outlet area (18, 16) and
- the guide elements (14) are designed strip-shaped.

17. Device according to any one of claims 12 to 16,
**characterized in that**
seen in the longitudinal direction of the channel (12) the guide elements (14, 12) are curved.

18. Device according to any one of claims 12 to 17,
**characterized in that**
at the inlet area (16, 18) and/or at the outlet area (18, 16) at least one fluid-permeable surface section, preferably a filter medium (15), is provided which can be flowed through by the wash fluid (24) and, if required, also by the material component to be separated.

19. Device according to any one of claims 12 to 18,
**characterized in that**
the surface of the inlet area (16, 18) that is flowed through by the wash fluid (24) is smaller than the surface of the outlet area (18, 16) that is flowed through by the wash fluid (24).

20. Device according to any one of claims 12 to 19,
**characterized in that**
- a plurality of inlet areas (26, 18) and outlet areas (28, 16) is designed at the channel (12), with each inlet area (26, 18) is assigned to an outlet area (28, 16) and
- seen in the longitudinal direction of the channel (12) an inlet area (18) with the assigned outlet area (16) each follows an inlet area (26) with the assigned outlet area (28), with the respective following inlet area (26) being provided at the channel wall facing the previous inlet area (18).

21. Device according to claim 20,
**characterized in that**
seen in the flow direction of the mixture of materials (20) the outlet area (28) arranged downstream is in flow connection with the inlet area (18) arranged upstream directly opposite the latter.

## Revendications

1. Procédé de séparation de matériaux, dans lequel
- un mélange (20) de matériaux est envoyé à travers un canal (12) dans une direction d'écoulement au moins approximativement parallèle au champ gravitationnel, et
- un fluide de lavage (24) est envoyé à travers le canal (12) dans une direction transversale à la direction d'écoulement du mélange (20) de matériaux, fluide qui refoule hors du mélange (20) de matériaux au moins un composant à séparer du mélange (20) de matériaux et l'évacue du canal (12),
***caractérisé en ce que*** le fluide de lavage (24) est envoyé dans le canal et/ou hors du canal (12) au moyen d'éléments directeurs (14, 30) délimitant au point partiellement le canal (12), éléments qui sont disposés parallèlement et à distance les uns des autres et s'étendent suivant un angle prédéterminé par rapport à la direction d'écoulement du mélange (20) de matériaux.

2. Procédé selon la revendication 1, ***caractérisé en ce que*** les éléments directeurs (14, 30) sont inclinés avec leurs faces plates, en regardant dans la direction d'écoulement du mélange (20) de matériaux, de telle manière que des composants particulaires (22) du mélange (20) de matériaux qui, sinon, se déposeraient sur les éléments directeurs (14, 30) reviennent au moins partiellement dans le mélange (20) de matériaux en écoulement.

3. Procédé selon la revendication 1 ou 2, ***caractérisé en ce que*** le fluide de lavage (24) est envoyé à travers au moins une section de surface perméable au fluide, délimitant au moins partiellement le canal (12), de préférence à travers un agent filtrant (15), dans le canal et/ou hors du canal (12).

4. Procédé selon l'une quelconque des revendications 1 à 3, ***caractérisé en ce que*** le mélange (20) de matériaux s'écoule à travers le canal (12) par gravité.

5. Procédé selon l'une quelconque des revendications 1 à 3, ***caractérisé en ce que*** le mélange (20) de matériaux est envoyé à travers le canal (12) éventuellement également contre la force de gravité.

6. Procédé selon l'une quelconque des revendications 1 à 5, ***caractérisé en ce qu***'un mouvement oscillatoire, de type choc et/ou rotatif, se superposant à l'écoulement continu du mélange (20) de matériaux est produit dans le mélange (20) de matériaux.

7. Procédé selon l'une quelconque des revendications 1 à 6, ***caractérisé en ce que*** la vitesse d'écoulement du fluide de lavage (24) par rapport à la vitesse d'écoulement du mélange (20) de matériaux est choisie de telle sorte que l'écoulement du mélange (20) de matériaux à travers le canal (12) soit maintenu et de préférence une évacuation hors du canal (12) du composant ou des composants de matériaux qui doit ou doivent rester dans le mélange (20) de matériaux soit empêchée d'une manière au moins à peu près complète.

8. Procédé selon la revendication 7, ***caractérisé en ce que*** la vitesse d'écoulement du fluide de lavage (24) est réduite en fonction de la longueur du canal (12) déjà parcourue par le mélange (20) de matériaux.

9. Procédé selon l'une quelconque des revendications précédentes, ***caractérisé en ce que*** la vitesse d**'**écoulement du fluide de lavage (24) à travers le canal (12) est ajustée en fonction du rapport de surface entre la surface (16, 18) traversée par le fluide de lavage (24) lors de l'entrée dans le canal (12) et la surface (16, 18) traversée par le fluide de lavage (24) lors de la sortie du canal (12).

10. Procédé selon l'une quelconque des revendications précédentes, ***caractérisé***
***en ce que*** le fluide de lavage (24) est envoyé plusieurs fois à travers le canal (12), et
***en ce que*** la direction d'écoulement transversal du fluide de lavage (24) à chaque nouveau passage dans le canal (12) diffère de préférence de la direction d'écoulement transversal d'au moins un écoulement transversal antérieure du fluide de lavage (24) à travers le canal (12), de plus grande préférence au moins de la direction d'écoulement transversal de l'écoulement transversal produit juste avant.

11. Procédé selon l'une quelconque des revendications précédentes, ***caractérisé en ce qu***'un écoulement du mélange (20) de matériaux selon une section transversale d'écoulement polygonale, ronde ou ovale est produit dans le canal (12).

12. Dispositif de séparation de matériaux, en particulier pour appliquer le procédé selon l'une quelconque des revendications 1 à 11,
avec au moins un canal (12) pour faire passer un mélange (20) de matériaux à séparer, qui présente au moins une zone d'entrée (16, 18) et au moins une zone de sortie (18, 16) pour un fluide de lavage (24) pour refouler hors du canal (12) un composant à séparer du mélange (20) de matériaux,
- la zone d'entrée (16, 18) et la zone de sortie (18, 16) étant prévues sur la paroi du canal et
- la zone d'entrée (16, 18) et la zone de sortie (18, 16) se faisant face directement ou indirectement au moins par sections en regardant transversalement à la direction longitudinale du canal (12),
***caractérisé***
- ***en ce que*** la zone d'entrée (16, 18) et/ou la zone de sortie (18, 16) présentent plusieurs éléments directeurs (14) pour diriger le courant de fluide de lavage dans et/ou hors du canal (12) ,
- ***en ce que*** les éléments directeurs (14) sont disposés parallèlement à distance les uns des autres, et
- ***en ce que*** les éléments directeurs (14) sont inclinés d'un angle prédéterminé par rapport à la direction longitudinale du canal (12).

13. Dispositif selon la revendication 12, ***caractérisé en ce que*** l'angle prédéterminé correspond de préférence à un angle d'écoulement d'un composant particulaire (22) du mélange (20) de matériaux, auquel un dépôt du composant particulaire (22) sur les éléments directeurs (14) est empêché de façon au moins approximativement complète.

14. Dispositif selon la revendication 12 ou 13, ***caractérisé en ce que*** la distance entre les éléments directeurs (14) et/ou l'angle prédéterminé d'au moins l'un des éléments directeurs (14) est réglable de manière variable.

15. Dispositif selon la revendication 12, 13 ou 14, ***caractérisé***
- ***en ce que*** le canal (12) présente au moins dans la zone d'entrée (16, 18) et/ou dans la zone de sortie (18, 16) une section transversale de forme ovale ou ronde, et
- ***en ce que*** les éléments directeurs (14) sont réalisés annulaires ou en segments annulaires et sont placés au moins par sections de manière concentrique au canal (12).

16. Dispositif selon la revendication 12, 13 ou 14, ***caractérisé***
- ***en ce que*** le canal (12) présente, au moins dans la zone d'entrée (16, 18) et/ou dans la zone de sortie (18, 16), une section transversale de forme polygonale, et
- ***en ce que*** les éléments directeurs (14) sont réalisés en forme de bandes.

17. Dispositif selon l'une quelconque des revendications 12 à 16, ***caractérisé en ce que*** les éléments directeurs (14, 12) sont courbés en regardant dans la direction longitudinale du canal (12).

18. Dispositif selon l'une quelconque des revendications 12 à 17, ***caractérisé en ce qu****'*il est prévu, dans la zone d'entrée (16, 18) et/ou dans la zone de sortie (18, 16), au moins une section de surface perméable aux fluides, de préférence un agent filtrant (15), qui peut être traversé par le fluide de lavage (24) et éventuellement également par le composant de matériau à séparer.

19. Dispositif selon l'une quelconque des revendications 12 à 18, ***caractérisé en ce que*** la surface de la zone d'entrée (16, 18) pouvant être traversée par le fluide de lavage (24) est plus petite que la surface de la zone de sortie (18, 16) pouvant être traversée par le fluide de lavage (24).

20. Dispositif selon l'une quelconque des revendications 12 à 19, ***caractérisé***
***en ce que*** sur le canal (12) sont formées plusieurs zones d'entrée (26, 18) et zones de sortie (28, 16), à chaque zone d'entrée (26, 18) étant associée une zone de sortie (28, 16), et
***en ce qu****'*en regardant dans la direction longitudinale du canal, à chaque fois une zone d'entrée (18) avec la zone de sortie (16) associée suit une zone d'entrée (26) avec sa zone de sortie associée (28), la zone d'entrée (26) suivante étant prévue à chaque fois sur la paroi de canal opposée à la zone d'entrée (18) précédente.

21. Dispositif selon la revendication 20, ***caractérisé en ce que*** la zone de sortie (28) placée en aval en regardant dans la direction d'écoulement du mélange (20) de matériaux est en communication d'écoulement avec la zone d'entrée (18) placée directement en aval par rapport à elle.
